# EUROPEAN PATENT APPLICATION

(11) **EP 4 475 006 A1**
(43) Date of publication of application: **11.12.2024**
(21) Application number: 24178110.3
(22) Date of filing: 24.05.2024
(51) Int. Cl.: G06F 16/242

(54) **METHOD AND APPARATUS FOR PROCESSING AND QUERYING DATA PERTAINING TO AN ENTERPRISE**

(30) Priority: 26.05.2023 US 202363504587 P
(71) Applicant: Accenture Global Solutions Limited, Dublin 4 (IE)
(72) Inventor: IVATURI, Raju, New Jersey, 07470 (US); ANAND, Harminder, New Jersey, 07458 (US); ZHANG, Bo, California, 92127 (US); GUAN, Lan, New York, 10023 (US); YANG, Shu-Yu, Illinois, 60491 (US); HE, Yuan, California, 95113 (US); KANG, Sukryool, California, 94566 (US)
(74) Representative: Strange, Harry George

(57) **Abstract**

An artificial intelligence (AI) technique to process and query data pertaining to an enterprise. A user raises a request which is processed to predict a knowledge context area based on a predetermined structure of the enterprise. The knowledge context area is predicted from multiple knowledge context areas, on the basis of the received user request and a conversation history of the user in past. Further, a knowledge database is selected from multiple knowledge databases based on the user request and the predicted knowledge context. The knowledge databases include preprocessed data from multiple data sources. The knowledge database is queried on the basis of the user request related to the knowledge context to obtain a result and the result is then displayed as an output.

## Description

### CROSS REFERENCE TO RELATED APPLICATIONS

The instant application relates to US Provisional Application 63/504,587, titled Enterprise Knowledge Harmonizer and Orchestrator, filed on May 26, 2023, the contents of which are incorporated by reference herein in their entirety.

### FIELD

Various embodiments described herein relate generally to computer implemented systems for data processing. More specifically, various embodiments described herein relate to a computer implemented technique for processing and querying data pertaining to an enterprise.

### BACKGROUND

Enterprises often have a plurality of departments and teams which may be oriented towards a specific function of the enterprises. In some cases, due to inefficient work utilizations, disparate teams and departments may have little to no intercommunication between teams. This may lead to persons working with the enterprise having insufficient information regarding workings of other teams.

To overcome these challenges, many enterprises have incorporated department-based tools and portals for people to access relevant information. However, while these tools and portals may connect certain teams and/or departments, these tools and portals may have limited access to information across the enterprises. For example, there may be many different portals across the organization, resulting in challenges to accessing the right tool/portal to find the right information.

If traditional data processing techniques are used to extract knowledge, such knowledge extraction requires more time and more utilization of computing resources, for e.g., processing resources, memory resources, networking resources etc. without harmonization of fetched data from the knowledge extraction.

### SUMMARY

In some aspects, a method includes processing a received first user request by one or more processors to predict a knowledge context area based on the received first user request and a conversation history with the first user. The knowledge context area may be predicted from a set of knowledge context areas. The knowledge context area may be based on a predetermined structure of an organization associated with the first user. The method may include selecting, by one or more processors, one or more knowledge databases by the ML model. The one or more knowledge databases may be selected from a set of knowledge databases. The one or more knowledge databases are selected based on the received first user request and the predicted knowledge context area, a user role associated with the received first user request, and contextual information from the conversation history associated with the received first user request. The one or more knowledge databases includes preprocessed data from one or more data sources. The method may include querying the knowledge database based on the received first user request to obtain a result. The method may include outputting the result based on queried knowledge database.

The above embodiment may have various optional features. The method may include a step of determining a user role based on an identity associated with the received first user request. The knowledge context area may be predicted based on the user role associated with the received first user request. The preprocessed data may be preprocessed by an ML model data extractor. The ML model data extractor may be configured to generate vectorized data and metadata to classify portions of the data into categories. The categories may be defined based on knowledge context area associated with the organization. Knowledge context areas associated with the organization may be represented in a knowledge graph. The knowledge graph may be based on entity relationships within the organization (as used herein, organization and enterprise may be used interchangeably).

Further, the method may include a step of receiving a second user request, predicting that the second user request is associated with a new knowledge context area and querying another knowledge database based on a second user request and a new knowledge context area. Another knowledge database may be associated with the new knowledge context area. In another embodiment, the method may include a step of receiving a second user request, predicting that the second user request is associated with a current knowledge context area and querying the knowledge database based on the second user request. There are entities within the organization that are associated with different knowledge databases. The knowledge databases may include a documentation database, source code, historical service ticket database, enterprise transactional database etc.

Furthermore, the method may include a step of summarizing conversation associated with the first request and the result. The contextual information from the conversation may be determined based on the summarized conversation. Herein, summarizing the conversation may be performed after a predetermined number of requests and results occurred in the conversation. Further, summarizing the conversation preserves relevant details of the conversation.

In an embodiment, an apparatus may include a memory and a processor, communicatively coupled to each other. The processor may be configured to process a received first user request to predict a knowledge context area. The knowledge context area may be predicted from a set of knowledge context areas. The knowledge context area may be predicted based on the received first user request and a conversation history with the first user. The knowledge context area may be based on a predetermined structure of an organization associated with the first user. The processor may select one or more knowledge databases of a set of knowledge databases. The one or more knowledge databases may be selected based on the received first user request and predicted knowledge context area, a user role associated with the received first user request, and contextual information from the conversation history associated with the received first user request. The one or more knowledge databases includes preprocessed data from the one or more data sources. The processor may query the knowledge database based on the received first user request to obtain a result. The processor may output the result based on the querying of the knowledge database.

The above embodiment may have various optional features. The processor may be configured to determine a user role based on an identity associated with the received first user request. The knowledge context area may be predicated based on the user role associated with the received first user request. The preprocessed data may be preprocessed by an ML model data extractor. The ML model data extractor may be configured to generate vectorized data and metadata to classify portions of the data into categories. The categories may be defined based on knowledge context area associated with the organization. The knowledge context areas associated with the organization may be defined based on a knowledge graph. The knowledge graph may be based on entity relationships within the organization. The entities within the organization may be associated with different knowledge databases. The processor may be configured to receive a second user request; predict that the second user request is associated with a new knowledge context area, and query another knowledge database based on the second user request and new knowledge context area. Another knowledge database may be associated with the new knowledge context area.

### BRIEF DESCRIPTION OF THE DRAWINGS

Various embodiments in accordance with the present disclosure will be described with reference to the drawings, in which:
FIG. 1 illustrates an exemplary environment for executing implementations of the present disclosure.
FIG. 2 illustrates a method disclosing a computer implemented method of the present disclosure.
FIG. 3 illustrates a block diagram presenting types of users that can request responses from the ML model in accordance with the present disclosure.
FIGs. 4A, 4B, and 4C are exemplary process flows illustrating pre-processing of data in accordance with the present disclosure.
FIGs. 4D, 4E, and 4F are exemplary process flow diagrams illustrating data extraction from pre-processed data in accordance with the present disclosure.
FIGs. 5 and 6 are flow diagrams disclosing further steps comprised within the computer implemented method of the present disclosure.
FIG. 7 is a process flow diagram presenting a topic switch agent in accordance with the present disclosure.
FIGs. 8A and 8B are process flow diagrams illustrating processes for summarizing conversations in accordance with the present disclosure.
FIG. 9 is a block diagram of an apparatus for performing aspects of the present disclosure.

### DETAILED DESCRIPTION

In the following description, various embodiments will be illustrated by way of example and not by way of limitation in the figures of the accompanying drawings. References to various embodiments in this disclosure are not necessarily to the same embodiment, and such references mean at least one. While specific implementations and other details are discussed, it is to be understood that this is done for illustrative purposes only. A person skilled in the relevant art will recognize that other components and configurations may be used without departing from the scope and spirit of the claimed subject matter.

References to one or an embodiment in the present disclosure can be, but not necessarily are, references to the same embodiment and, such references mean at least one of the embodiments.

Reference to any "example" herein (e.g., "for example", "an example of', by way of example" or the like) are to be considered non-limiting examples regardless of whether expressly stated or not.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various features are described which may be features for some embodiments but no other embodiments.

The terms used in this specification generally have their ordinary meanings in the art, within the context of the disclosure, and in the specific context where each term is used. Alternative language and synonyms may be used for any one or more of the terms discussed herein, and no special significance should be placed upon whether a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term. Likewise, the disclosure is not limited to various embodiments given in this specification.

It should be understood at the outset that, although exemplary embodiments are illustrated in the figures and described below, the principles of the present disclosure may be implemented using any number of techniques, whether currently known or not. The present disclosure should in no way be limited to the exemplary implementations and techniques illustrated in the drawings and described below.

Modifications, additions, or omissions may be made to the systems, apparatuses, and methods described without departing from the scope of the disclosure. For example, the components of the systems and apparatuses may be integrated or separated. Moreover, the operations of the systems and apparatuses disclosed may be performed by more, fewer, or other components and the methods described may include more, fewer, or other steps. Additionally, steps may be performed in any suitable order. As used in this document, "each" refers to each member of a set or each member of a subset of a set.

Without intent to limit the scope of the disclosure, examples of instruments, apparatus, methods, and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

The term "comprising" when utilized means "including", but not necessarily limited to"; it specifically indicates open-ended inclusion or membership in the so-described combination, group, series and the like.

The term "a" means "one or more" unless the context clearly indicates a single element.

"First," "second," etc., re labels to distinguish components or blocks of otherwise similar names but does not imply any sequence or numerical limitation.

"And/or" for two possibilities means either or both of the stated possibilities ("A and/or B" covers A alone, B alone, or both A and B take together), and when present with three or more stated possibilities means any individual possibility alone, all possibilities taken together, or some combination of possibilities that is less than all the possibilities. The language in the format "at least one of A ... and N" where A through N are possibilities means "and/or" for the stated possibilities (e.g., at least one A, at least one N, at least one A and at least one N, etc.).

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).It should also be noted that in some alternative implementations, the functions/acts noted may occur out of the order noted in the figures. For example, two steps disclosed or illustrated in succession may in fact be executed substantially concurrently or may sometimes be executed in the reverse order, depending upon the functionality/acts involved.

Specific details are provided in the following description to provide a thorough understanding of embodiments. However, it will be understood by one of ordinary skill in the art that embodiments may be practiced without these specific details. For example, systems may be illustrated in block diagrams so as not to obscure the embodiments in unnecessary detail. In other instances, well-known processes, structures, and techniques may be illustrated without unnecessary detail in order to avoid obscuring example embodiments.

A machine learning model (ML model) refers to a file that has been trained to recognize patterns by passing a training dataset and providing an algorithm to analyze and learn from that training dataset. For a supervised learning model, the training dataset include labels. These labels correspond to the output of an algorithm. A typical model attempts to apply correct labels for the data by applying an algorithm. For example, when the training dataset comprises files to be classified, a predicted label for a given file is calculated. These calculations are then compared to the actual label for that file. The degree of error, the variation between the predicted label and the actual label, is calculated by way of another algorithm, such as a loss function. By repeated attempts (epochs) at classifying the training data, the model will iteratively improve its accuracy. When the accuracy of the model on the training data is optimal, the trained machine learning model can then be used to analyze testing data. Optimization in this context refers to a model that is trained to classify the test data with an acceptable level of accuracy but not overtrained to the point that the model is so sensitive to idiosyncrasies in the training dataset that testing dataset results suffer. Testing data refers to data that has not been seen before.

Some embodiments of the present disclosure provide a computer implemented technique for processing and querying data pertaining to an enterprise. The present disclosure introduces one or more processors which queries information across different teams and departments of the enterprise. Raw data from multiple different teams and departments may be processed to extract intelligible information saved in multiple databases, which may then be embedded into a knowledge graph. Further, a user query (request and query may be interchangeably used) may be received and analyzed to determine a knowledge context area. The knowledge context area may be associated with one or more databases of the multiple knowledge databases. The knowledge context area may be selected by analyzing the received user's query and previously saved conversation history of the user in the knowledge databases. Thus, relevant information is fetched from the knowledge database and displayed as output.

According to an embodiment of the invention, a computer implemented method is provided. The method includes processing a received first user request by a processor to predict a knowledge context area. The knowledge context area is predicted from a set of knowledge context areas. The knowledge context area is predicted based on the received first user request and a conversation history with the first user. The knowledge context area is based on a predetermined structure of an organization associated with the first user. The method includes selecting one or more knowledge databases (may be interchangeably used as database or server) of a set of knowledge databases by the processor. The one or more knowledge databases are selected based on the received first user request and predicted knowledge context area, a user role associated with the received first user request, and contextual information from the conversation history associated with the received first user request. The one or more knowledge databases includes preprocessed data from one or more data sources. The method includes querying the knowledge database based on the received first user request to obtain a result. The method includes outputting the result based on the querying of the knowledge database.

According to another embodiment of the invention, an apparatus is provided. The apparatus includes a memory and a processor, communicatively coupled to the memory. The processor may be configured to process a received first user request to predict a knowledge context area. The knowledge context area is predicted from a set of knowledge context areas. The knowledge context area is predicted based on the received first user request and a conversation history with the first user. The knowledge context area is based on a predetermined structure of an organization associated with the first user. The processor may select one or more knowledge databases of a set of knowledge databases by the processor. The one or more knowledge databases are selected based on the received first user request and predicted knowledge context area, a user role associated with the received first user request, and contextual information from the conversation history associated with the received first user request. The one or more knowledge databases includes preprocessed data from one or more data sources. The processor may query the knowledge database based on the received first user request to obtain a result. The processor may output the result based on the querying of the knowledge database.

In this way, the processor may query multiple knowledge databases based on the user request and select relevant knowledge database relevant to the context related to the user's request. Therefore, the present disclosure discloses the techniques to determine the relevant knowledge database and find the results for the user's query based on trained ML model in an efficient manner. Moreover, the embodiments of the present disclosure may improve correct addressal of queries, and may conserve computing and networking resources that may otherwise be wasted addressing queries incorrectly. Therefore, it is appreciated that the present disclosure provides enhanced enterprise knowledge for processing and querying the data pertaining to enterprises. This provides a unique enterprise knowledge harmonizer and orchestrator to an enterprise with multiple tools and departments to work collaboratively in an efficient manner by avoiding unnecessary duplication of resources.

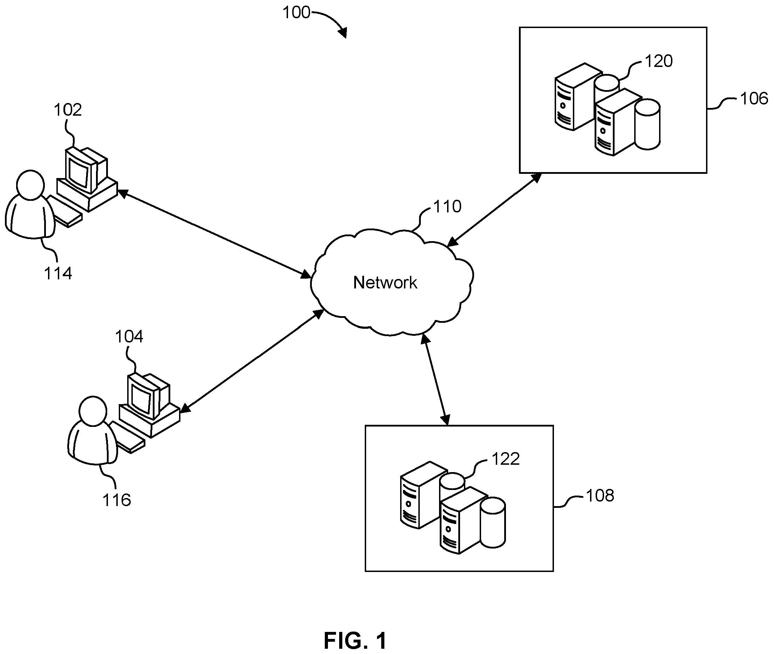

FIG. 1 illustrates an exemplary environment 100 for executing implementations of the present disclosure.

The exemplary environment 100 may be utilized to execute implementations of the present disclosure. In an embodiment, the exemplary environment 100 may be implemented as an environment where a knowledge platform is implemented and executed to provide services to generate on-demand responses for specific contextual requests. As illustrated in FIG. 1, the exemplary environment 100 comprises computing devices 102, 104, backend systems 106, 108, and a network 110. The computing devices 102, 104 may be utilized by respective users 114, 116 to interact with one or more backend systems, knowledge databases, processors, ML models according to implementations of the present disclosure. The exemplary environment 100 may comprise a plurality of server systems 120, 122 in the backend systems, which may be interconnected. Data pertaining to the enterprises may be stored in the plurality of databases.

The computing devices 102, 104 are depicted as desktop computing devices. It is contemplated, however, that implementations of the present disclosure may be realized with any appropriate type of computing device (e.g., smartphone, tablet, laptop computer, voice-enabled devices). The network 110 includes a local area network (LAN), wide area network (WAN), the Internet, or a combination thereof, and connects web sites, user devices (e.g., computing devices 102, 104), and the backend systems 106, 108. The network 110 may be a wired communication link, a wireless communication link. For example, mobile computing devices, such as smartphones can utilize a cellular network to access the network 110.

Each of the backend systems 106, 108 include a knowledge database in a plurality of server systems 120, 122. In an embodiment, the plurality of server systems 120, 122 hosts one or more computer-implemented services that users can interact with using computing devices. For example, components of the enterprise systems and applications may be hosted on one or more of the backend systems 106, 108. In an embodiment, a backend system can be provided as an on-premise system that is operated by an enterprise or a third-party taking part in cross-platform interactions and data management. In another embodiment, a backend system can be provided as an off-premise system (e.g., cloud or on-demand) that is operated by an enterprise or a third-party on behalf of an enterprise.

In an embodiment, the computing devices 102, 104 each include a computer-executable application executed thereon. In an embodiment, each of the computing devices 102, 104 include a web browser application executed thereon, which may be used to display one or more web pages of platform running application. In an embodiment, each of the computing devices 102, 104 is associated with the display capable of displaying the GUI that enables the respective users 114, 116 to interact with a machine learning (ML) model.

In accordance with implementations of the present disclosure, and as noted above, the backend systems 106, 108 may host enterprise applications or systems that require data sharing and data privacy. In an embodiment, computing devices 102, 104 communicate with the backend systems 106, 108 over the network 110.

In another embodiment, the backend systems 106, 108 are implemented as a cloud environment that includes one or more of the plurality of server systems 120, 122. The backend systems 106 may be implemented in a cloud environment that may include various forms of servers including, but not limited to, a web server, an application server, a proxy server, a network server, and/or a server pool. In general, server systems accept requests for application services and provide such services to any number of client devices (for example, the computing devices 102, 104 over the network 110). In an embodiment, the embodiments of the present disclosure are implemented at a backend server (such as one of the backend systems 106, 108), where for example, it can be executed as a cloud solution that can be accessed based on requests from users, for example, associated with a computing device, such as the computing devices 102, 104.

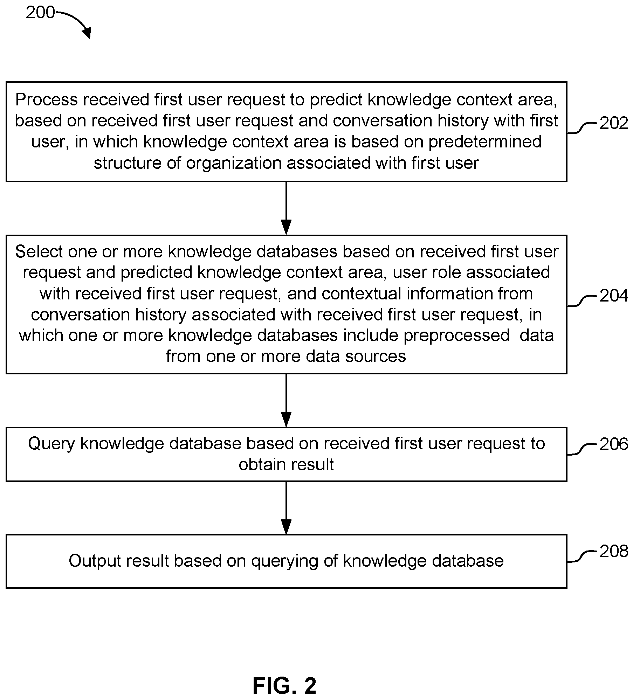

FIG. 2 is a method 200 illustrating a technique for processing and querying data pertaining to an enterprise, in accordance with aspects of the present disclosure. The method 200 illustrates the technique that may be performed in the environment 100 where a knowledge platform is implemented and executed to provide services to generate on-demand, contextually aware responses for user requests, in accordance with aspects of the present disclosure.

As illustrated in FIG. 2, the technique includes, at step 202, processing of a received first user request by a processor to predict a knowledge context area, of a set of knowledge context areas, based on the received first user request and a conversation history with the first user. The knowledge context area is based on a predetermined structure of an organization associated with the first user. The organization includes different departments, teams, and/or various entities that are associated with different knowledge databases. These entities may have contextual data associated with a specific context structured in respective knowledge databases. The knowledge databases may include a documentation database, source code, historical service ticket database, enterprise transactional database, etc.

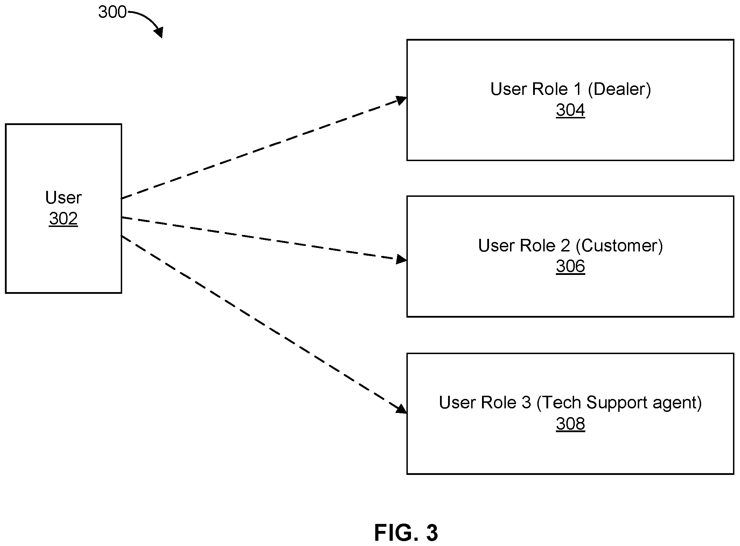

The received first user request may pertain to a query provided by the user. In instances where user preferences are used, use of the user preferences is premised on the explicit consent of users. The user may have a role within the organization, and this role may be a user role. The user roles are described in detail hereinbelow with FIG. 3.

The ML model refers to a pre-trained machine learning model, which has been trained on a plurality of enterprise knowledge databases. The ML model utilizes its training to identify patterns in data and identify actionable insights. The ML model may also be utilized to predict future events based on the identified patterns. In an exemplary embodiment, the ML model may be implemented as a Large Language Model (LLM). The LLM refers to a computational ML model configured to achieve general-purpose language generation and other natural language processing tasks such as classification. Advantageously, the LLM may be utilized for providing data in the form of natural language during conversations with the user.

The ML model may be configured to work with a Machine Learning Orchestrator (MLO) to manage and coordinate complex workflows and processes on specific schedule. The MLO may load data into memory, perform processing, and then pass the data to a next task in a pipeline. Thus, MLO may instantiate process workflows and direct machine learning operations.

In addition to the above, MLO may provide an environment set up to execute the steps of a pipeline. The pipelines consist of several interconnected components that work together to deliver value. For example, a workflow may include multiple parallel/branching pipelines. The pipeline for which the needed inputs are available may start execution as per the required workflow. The workflow is a process of tasks, such as data collection, data cleaning, feature engineering, model selection, training, evaluation, and deployment. A ML pipeline is a specific type of workflow that focuses on automating and streamlining the sequence of data processing steps for a ML model or a set of ML models. The MLO may execute a portion of the pipeline once all inputs, which may be outputs of previous steps of the pipeline, to that portion of the pipeline are available. The MLO generally performs a series of tasks such as data featurization, training the ML model, evaluating the trained model, saving the model, and monitoring the model.

The knowledge context area refers to a context of the knowledge area, and the set of knowledge context areas refers to a dataset comprising all knowledge context areas pertaining to the organization. For example, the set of knowledge context areas may include one or more of the departments in the organization such as Information Technology (IT), Administrative Department, Logistics, Research, Intellectual Property, and the like. The context relevant to each of the department may be saved in their respective databases. Identifying the context of a conversation may be helpful to having a productive conversation. For example, the ML model may provide a more relevant result when the context of the conversation is accurately identified. Notably, the knowledge context area is based on a predetermined structure of the organization associated with the user. The user may be associated with the organization in capacity of an employee, a dealer, an agent, a customer, and the like.

The conversation history refers to a historical dataset of conversations with user or support chats or chat with bots or troubleshooting tips or any other relevant data (together referred as conversations) that provide context related to the user's query resolution in the past to resolve any type of user's request. These conversations may be saved as raw data in the databases, which may be input to (e.g., in a prompt) the ML model. In an embodiment, the conversation history includes information pertaining to previous dialogue exchanged by the user in the past for different requests that may be used in a current conversation with a user. For example, if the current conversation pertains to an IT issue, the previous dialogue exchanges may pertain to the issue at hand, the troubleshooting tips implemented, and the like. In some cases, the ML model may identify the context of the received user request based on the previous dialogue exchanged by the user. Even though the previous conversations pertain to different queries, the ML model may be able to identify the details of the user and leverage the previous conversations to identify the context. For example, if in a previous conversation the user has mentioned getting locked out of its account, and the received first user request pertains to troubleshooting tips on getting locked out of an account, the ML model may be able to relate that to an account malfunctioning and thereby draws context regarding the user query. It would be appreciated that the ML model may identify the context of the received user request based on the previous conversations.

In another example, the ML model utilizes its training to predict the knowledge context area based on the received user request and the conversation history. For example, if the first user request pertains to an inability to perform an order entry, the ML model may identify the context being 'order entry updating by dealers' using the received first user request and the conversation history.

Thereafter, the method 200 includes, at step 204, selecting one or more knowledge databases of a set of knowledge databases by the ML model based on the received first user request and predicted knowledge context area, the user role associated with the received first user request, and contextual information from the conversation history associated with the received first user request, in which the one or more knowledge databases includes preprocessed data from one or more data sources.

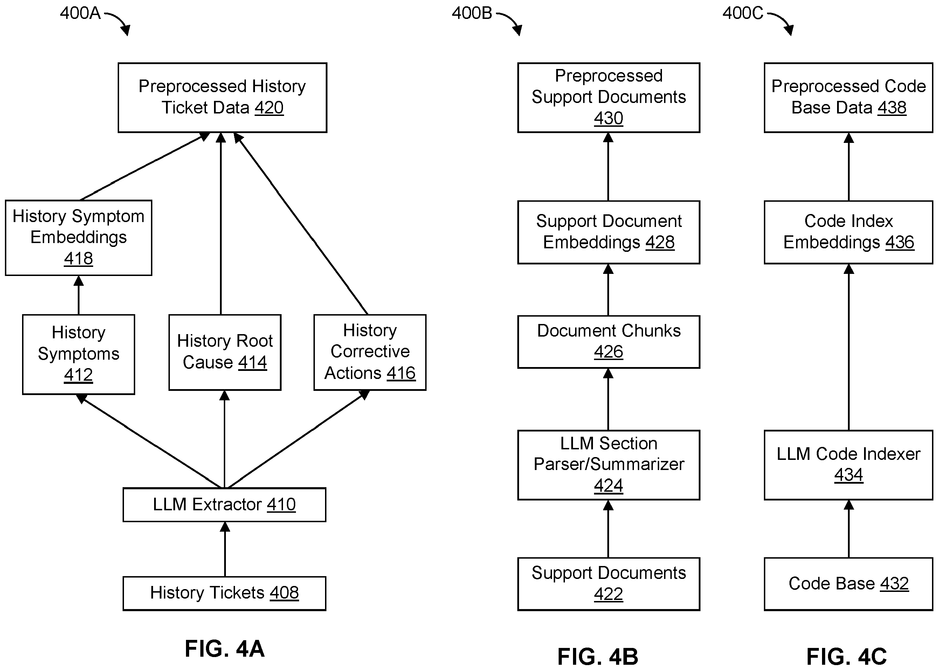

The knowledge databases refer to databases of enterprise knowledge, which are utilized by the ML model to perform the method disclosed in the present disclosure. Specifically, the ML model utilizes the knowledge databases to fetch an output for the received user request. For example, the one or more knowledge databases may store conversation history of different attributes/events/request/query and so on related to the historical tickets, support documents, code base, and the like, queried in past. Further, the one or more knowledge databases include preprocessed data from one or more data sources, such as the historical tickets, support documents, code base and the like. Original data from the enterprise database may be preprocessed into insights and included in the one or more knowledge databases for improving the accuracy of the present disclosure. The preprocessing of enterprise data is described in detail hereinbelow with FIG. 4A.

User requests refer to questions, queries, or requests received from the user. In an embodiment of the present disclosure, the user requests include questions regarding enterprise operations, queries regarding operational work, and/or requests for fetching enterprise data. For example, the user request may be implemented as- `Please guide me on how to access a new software using a self-service portal'.

Contextual information refers to information which assists in identifying the context of a query, dialogue, or conversation. For example, when a user asks questions regarding a bank, the framing of the question based on the conversation history may provide context with respect to their question with respect to the bank. If the user has previously referred the word 'bank' as a monetary bank, the ML model can identify the context to be with respect to the monetary bank.

In this way, the ML model is not required to query through all knowledge databases, and instead only queries relevant database(s) based on determined context. Identification of appropriate knowledge database advantageously reduces the computational time and effort as compared to querying the entire set of knowledge databases. The identification of accurate contextual information makes the method faster, reliable, robust, and accurate.

The method 200 further includes, at step 206, querying the knowledge database based on the received first user request to obtain a result. The ML model searches through the knowledge database to identify relevant responses and shortlists the identified relevant responses with respect to the received first user request to provide the result. When multiple identified relevant responses are returned, in order to prioritize a most relevant output, a semantic similarity search may be performed in accordance to the user's query. For example, when the received user request pertains to inability to perform an order entry, the ML model may identify relevant responses pertaining to order entry concerns and shortlist the result based on specific details of the request, like the user role, order entry number, and the like. In an embodiment, the ML model may also search through the knowledge database to identify if other queries/requests have been raised pertaining to a same or similar concern. For example, if users have raised concerns for a particular order (e.g., with a particular order number) previously, the ML model may be able to identify, on another such request, that there may be a glitch with the order, for example, based on the order number.

Furthermore, the method 200 includes, at step 208, outputting the result based on the querying the knowledge database. It will be appreciated that the computer implemented method 200 is implemented via a computing device. The computing device may be a computer, a laptop, a tablet, a smart phone, a wearable device, and the like. The user may interact with the ML model via a Graphical User Interface (GLTI). Hence, the result may be output for display by the GUI (e.g., via another portion of an application, another application, an operating system, a driver, etc.). In some cases, outputting the result may include displaying the result on a display associated with the computing device via the GUI. In some cases, the output may be processed, for example, by another application and may not be displayed. For example, the output may be input to a speech generation algorithm/application for output as generated speech.

The steps of the method may be repeated for a conversational resolution to the user's concern. As such, the user may input several requests for clarity and combine the required output at an end of the conversation.

FIG. 3 illustrates a block diagram presenting types of users 300 that can request responses from the ML model in accordance with the present disclosure.

As illustrated in FIG. 3, the user 302 may have a plurality of user roles, or personas. In an embodiment, a library of such user roles may be created and maintained at a database associated with an implementation of the method 200. Notably, each user role (or persona) can be customized to a respective user group, and the overall behavior of the ML model can be focused (modified, configured, adjusted, etc.) on the type of user who is requesting a response. As illustrated in the figure, the user 302 may be implemented in a dealer user role 304, a customer user role 306, a technology support user role 308, etc.

In some cases, the user role may be determined based on an identity associated with the received user request. Based on the received first user request by the processor, a database may be queried based on the user login determine the user role and then may pass the queried output to the ML model via a parameter. The user role may be determined based on information pertaining to the user 300, for example, based on a job title, organization chart, address book information, etc. associated with login information used by the user 300. For example, the ML model may determine the user role based on a position, a job title, a team, a department, and the like.

In an embodiment, the knowledge context area may be predicted based on the user role associated with the received first request. The user role may be considered as a factor by the ML model for predicting the knowledge context area. For example, a user with user role associated with technology support may use the abbreviation `IP' for internet protocol, but another user with user role associated with law may use the abbreviation `IP' for intellectual property. Hence, due to the user roles, the context of the received first request may vary drastically. Advantageously, considering the user role when identifying the knowledge context area may result in more accurate results for user requests by the ML model.

FIGs. 4A, 4B, and 4C illustrate exemplary process flows 400A, 400B, and 400C illustrating pre-processing of data, in accordance with the present disclosure.

In an embodiment, raw enterprise data may be processed by a Large Language Model (LLM) extractor 410 (hereinafter interchangeably referred to as ML model data extractor). FIGs. 4A, 4B, and 4C illustrate the process flows 400A, 400B, and 400C performed by the ML model data extractor. In an embodiment, the ML model data extractor is a software engine to extract intelligible data from the knowledge data.

The ML model data extractor extracts and processes the raw data to generate preprocessed data. The raw data may include historical tickets 408, support documents 422, and code base 432. The ML model data extractor includes an LLM extractor 410, an LLM section parser 424, and an LLM code indexer 434. The preprocessed data includes preprocessed history ticket data 420, preprocessed support documents 430, and preprocessed code base data 438. The preprocessed history ticket data 420, preprocessed support documents 430, and preprocessed code base data 438 are utilized as the one or more knowledge databases, such that the ML model queries through this data when processing a user request.

Figure 4A discloses an exemplary process flow 400A illustrating pre-processing of historical data. The historical data may be raw data stored in different databases, for example history tickets 408, support documents 422, code base 432, past conversations, and the like in accordance with aspects of the present disclosure. These past conversations may be with the user or other users and may include support chats, chat with bots, troubleshooting tips, or any other relevant data that provides context related to the user's query resolution in the past to resolve any type of user's request. The history tickets 408 are extracted by the LLM extractor 410. Thereafter, the LLM extractor 410 processes the history tickets 408 to derive intelligible data comprising history symptoms 412, history root cause 414, and history corrective actions 416. Thereafter, the history symptoms 412, the history root cause 414, and the history corrective actions 416 are converted into knowledge data. The history symptoms 412 are converted into historical symptom embeddings 418. Further, the historical symptom embeddings 418, the history root cause 414 and the history corrective actions 416 are processed to form preprocessed history ticket data 420.

Figure 4B discloses an exemplary process flow 400B illustrating pre-processing of support documents 422, in accordance with aspects of the present disclosure. The support documents 422 are extracted by the LLM section parser (or LLM section summarizer) 424. The LLM section parser 424 extracts and summarizes the information contained in the support documents 422 to provide document chunks 426. The document chunks 426 pertain to intelligible portions of the support documents 422. In an embodiment, a chunking strategy may be utilized to create intelligent document chunks. Examples of chunking strategy includes but are not limited toa noun phrase chunking technique, named entity recognition technique, text segmentation technique, dependency parsing technique, constituency parsing technique, chunking algorithms technique, word embedding chunking technique, topic modeling technique, sentence boundary detection technique, and the like.

Thereafter, the document chunks 426 are converted into support document embeddings 428. The document chunks 426 may be converted into support embeddings 428 using any data processing technique. Examples of data processing techniques include but are not limited to Word2Vec technique, GloVe (Global Vectors for Word Representation) technique, FastText technique, Doc2Vec technique, Universal Sentence Encoder technique, BERT (Bidirectional Encoder Representations from Transformers) technique, ELMo (Embeddings from Language Models) technique, and the like. Further, the support document embeddings 428 are converted into the preprocessed support documents 430.

Advantageously, the preprocessed support documents 430 are extracted from the support documents 422 to fit multiple such chunks into context window, thereby assisting the ML model to provide output (for example, by generating dynamic responses) based on more than one document, improving its efficiency. The context window may capture maximum amount of information that the ML model may process at a time. In order to enable the ML model to reason across multiple documents efficiently, the document may be converted to multiple chunks, so that the multiple chunks from multiple documents may fit in the context window at a time.

Figure 4C discloses an exemplary process flow 400C illustrating pre-processing of a code base 432, in accordance with aspects of the present disclosure. For example, business rules (for example, a certain user input cannot be longer than x characters) are extracted from the code base 432. As illustrated in the figure, the LLM code indexer 434 loads and processes the code base 432. The LLM code indexer 434 may be an LLM based indexer which processes natural language to identify code snippets. In some cases, the LLM code indexer 434 may analyze code repositories, documentation, and related resources to create a searchable index of code snippets and their descriptions. The LLM code indexer 434 generates code index embeddings 436 from the code base 432. The code index embeddings 436 may be generated by the LLM code indexer 434. Lastly, the code index embeddings 436 are converted into preprocessed code base data 438.

It will be appreciated that the ML model utilizes the preprocessed history ticket data 420, the preprocessed support documents 430, and the preprocessed code base data 438 as the knowledge databases for performing the computer implemented method 200. A combination of such preprocessed enterprise data, such as the preprocessed history ticket data 420, the preprocessed support documents 430, and the preprocessed code base data 438 may be utilized to generate an inferred knowledge base. Advantageously, the inferred knowledge base is vectorized and queried to perform the steps consistent with the present disclosure.

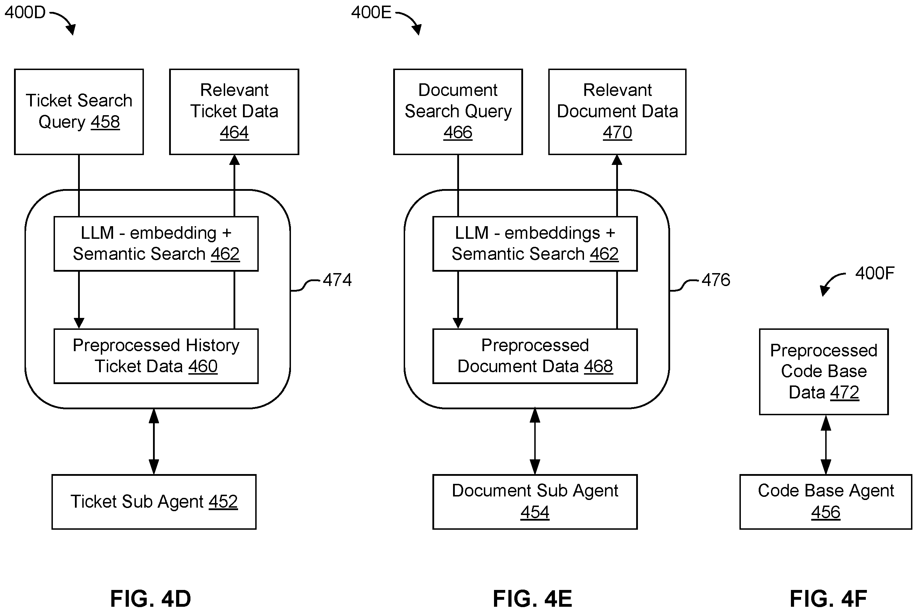

FIGs. 4D, 4E, and 4F illustrate exemplary process flows 400D, 400E, and 400F disclosing data extraction from pre-processed data, in accordance with the present disclosure.

In an embodiment, data is extracted from pre-processed data by the ML model. Hence, the process flows 400D, 400E, and 400F may be implemented by the ML model. The ML model may include an LLM-based sub agent, which is utilized to query data from a given knowledge database (for example, a given set of preprocessed data). In an exemplary embodiment, the LLM-based sub agent may be a ticket sub agent 452, a document sub agent 454, and/or a code base agent 456. Each of the ticket sub agent 452, the document sub agent 454, and the code base agent 456 perform steps to extract relevant data from respective knowledge databases based on the user request.

FIG. 4D illustrates and exemplary process flow 400D disclosing data extraction from preprocessed history ticket data 460, in accordance with aspects of the present disclosure. The ticket sub agent 452 processes a ticket search query 458 to search the preprocessed history ticket data 460 using an LLM embedding and semantic search 462, which collectively may be considered as an ML model 474. The ticket search query 458 refers to a user request or query pertaining to tickets. The LLM embedding and semantic search 462 refers to a unified search for leveraging information retrieval. Initially, raw text data may be part of the conversations that undergoes embedding, wherein the ML model converts it into high-dimensional numerical representations that encode semantic meaning. In an embodiment, these embeddings capture intricate linguistic nuances and contextual relationships within the data. Thereafter, the ML model performs a semantic search by comparing embeddings of search queries with information in the set of knowledge databases. Advantageously, using the embedding and semantic search assists in identifying relevant matches even when the wording differs, enhancing search accuracy by providing nuanced, context-aware, and relevant results. Thereafter, the ticket sub agent 452 extracts relevant ticket data 464 from the preprocessed history ticket data 460.

FIG. 4E illustrates and exemplary process flow 400E disclosing data extraction from pre-processed document data 468, in accordance with aspects of the present disclosure. The document sub agent 454 processes a document search query 466 to search the preprocessed document data 468 using the LLM embedding and semantic search 462. The document search query 466 refers to a user request or query pertaining to documents. Thereafter, relevant document data 470 is extracted from the preprocessed document data 468. The LLM embedding and semantic search 462 and the preprocessed document data 468, collectively be considered as an ML model 476.

FIG. 4E illustrates and exemplary process flow 400E disclosing data extraction from the pre-processed code base data 472, in accordance with aspects of the present disclosure. The code base agent 456 processes related queries to extract relevant data from preprocessed code base data 472. The code base agent 456 may process queries pertaining to code base using the pre-processed code base data 472.

In some embodiments, the ML model data extractor is configured to generate vectorized data and metadata to classify portions of the data into categories. The vectorized data refers to a dataset where each observation or data point is represented as a vector. In this context, a vector is an array or list of numerical values, where each value corresponds to a specific feature or attribute of the data. Beneficially, this representation allows for efficient processing and analysis of the data using mathematical operations. The metadata refers to descriptive data that provides information about the vectorized data. The metadata provides context and details about a given dataset, document, or resource, facilitating its organization, management, and understanding. The metadata may include a plurality of attributes such as, title, author, date created, file format, size, and/or keywords. The categories are defined based on knowledge context area associated with the organization.

In some embodiments, knowledge context areas associated with the organization are defined based on a knowledge graph. The knowledge graph refers to a graphical representation of interconnected knowledge, wherein entities are organized with their relationships within the organization. Notably, in the knowledge graph, nodes represent entities (such as people, places, concepts, or things) and edges represent the relationships between them. It will be appreciated that the vectorized data and metadata is utilized for embedding the knowledge context areas into the knowledge graph. The knowledge graph is based on entity relationships within the organization. For example, an employee in the legal team would be associated with the legal node with an employment relation edge.

In an embodiment, entities within the organization are associated with different knowledge databases. Herein, entities may refer to individuals, teams, groups, or departments. Hence, different entities are associated with different knowledge databases (utilizing different tools for work). In an example, an IT team may be considered as one such entity, having an IT knowledge database connected with IT support portals. In another example, an employee in the human resources (HR) team may be considered as an entity associated with an HR knowledge database connected with HR support and function portals.

In another embodiment, the knowledge databases include a documentation database, a source code, a historical service ticket database, an enterprise transactional database, and the like. Additionally, the knowledge databases include a plurality of such databases. As illustrated in FIG. 4A, the knowledge databases may include the preprocessed history ticket data 420, the preprocessed support documents 430, and the preprocessed code base data 438, and the like.

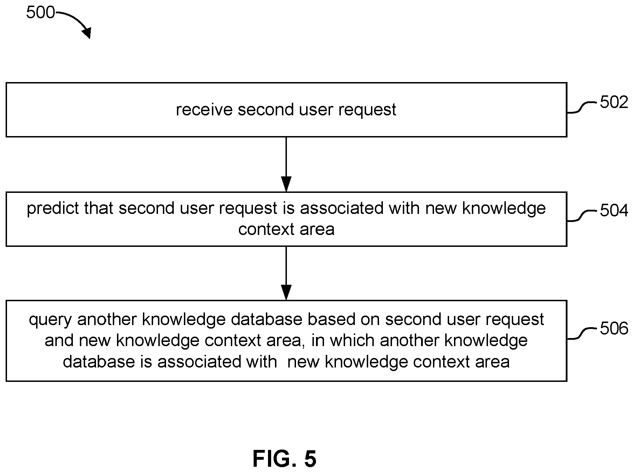

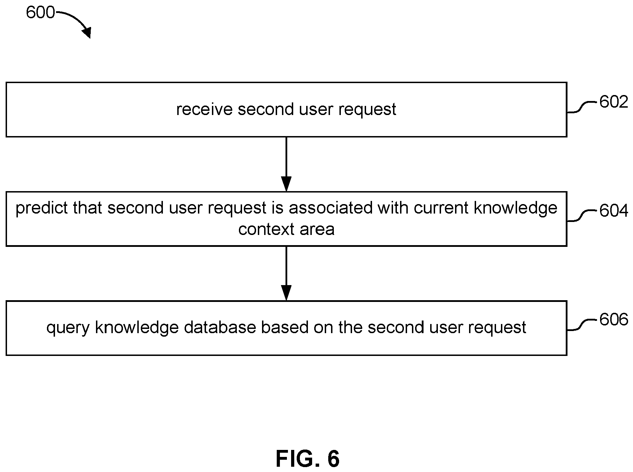

FIGs. 5 and 6 illustrate a flow diagram 500 and a flow diagram 600 disclosing a technique for processing additional user requests from the different user in two different scenarios, in accordance with aspects of the present disclosure. It will be appreciated that flow diagram 500 and flow diagram 600 illustrate different user scenarios based on different user requests. The second user request may be received from the same user or a different user. Hence, specifically, the flow diagram 500 illustrates a scenario when the second user request is predicted to be associated with a new knowledge context area and the flow diagram 600 illustrates a scenario when the second user request is predicted to be associated with a current knowledge context area.

As illustrated in FIG. 5, the flow diagram 500 includes, at step 502, receiving the second user request. The second user request may be a query or request for data. In an embodiment, the user inputs the second user request into the ML model via the GUI. Further, the flow diagram 500 includes, at step 504, predicting that the second user request is associated with the new knowledge context area. The prediction of knowledge context areas based on the second user request is performed similarly to the prediction as described above in method 200. The new knowledge context area refers to a knowledge context area different from the knowledge context area predicted for the received first user request. Furthermore, the flow diagram 500 includes, at step 506, querying another knowledge database based on the second user request and new knowledge context area, wherein the another knowledge database is associated with the new knowledge context area.

For example, if the first user request pertains to `not being able to log into device' and the second user request pertains to `unable to update order entry', the knowledge context area identified for the first user request would be 'IT', which is different from the new (or, another) knowledge context area of 'order management'. Hence, the ML model advantageously switches from querying databases based on previous knowledge context areas to the new knowledge context areas. Similarly, since the knowledge context areas are now different, the queried databases also change.

As illustrated in FIG. 6, the flow diagram 600 includes, at step 602, receiving the second user request. Further, the flow diagram 600 includes, at step 604, predicting that the second user request is associated with a current knowledge context area. The new knowledge context area refers to the knowledge context area predicted for the received first user request, or any received previous user request. Furthermore, the flow diagram 600 includes, at step 606, querying the knowledge database based on the second user request.

For example, if the first user request pertains to `not being able to log into device' and the second user request pertains to `accessing software from self-service portal', the knowledge context area identified for both user request would be `IT', hence, the ML model is not required to switch database for querying the second user request.

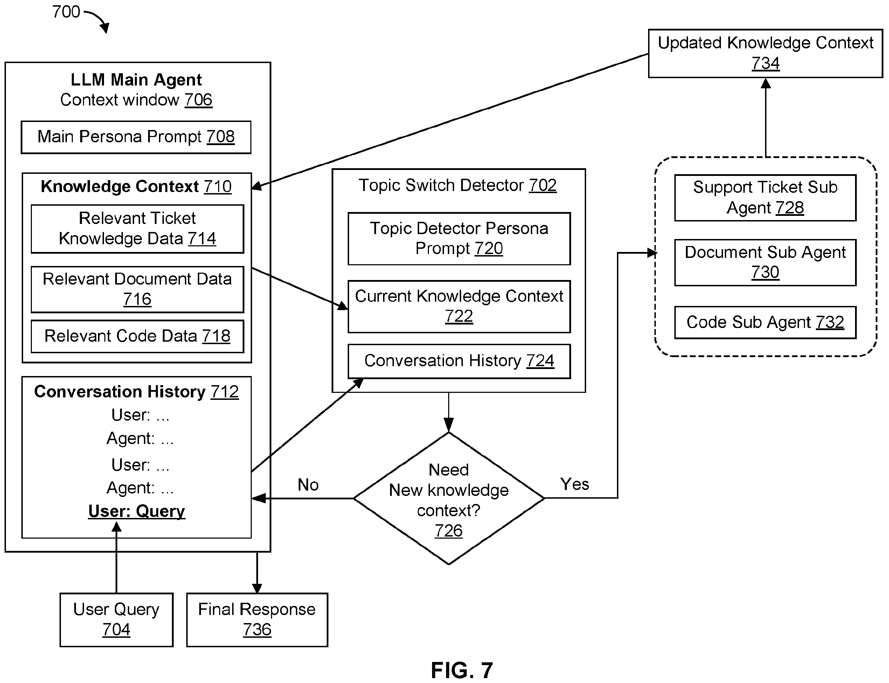

When a second user request is received, the context of the second user query is identified and if the context is different with respect to the context of the first user query, then the database may be switched based on the identified context. FIG. 7 is a process flow 700 diagram illustrating a process to select and switch databases based on the context of a user query.

The topic switch detector 702 uses an ML model for making decisions based on knowledge context and user conversation history. In an embodiment, the topic switch detector 702 identifies sufficient context during a user conversation.

The LLM main agent 706 receives a user query during a conversation between the user and ML model. The LLM main agent 706 comprises a context window, including a main persona prompt 708, a knowledge context 710, and conversation history 712. The knowledge context 710 further includes relevant ticket knowledge data 714, relevant document data 716, and relevant code data 718.

As illustrated in FIG. 7, the topic switch detector 702 comprises a topic detector persona prompt 720. The LLM main agent 706 sends the knowledge context 710 and the conversation history 712 to the topic switch detector 702. The topic switch detector 702 extracts current knowledge context 722 from the knowledge context 710, and conversation history 724 from the conversation history 712, respectively. Based on the user query 704, the current knowledge context 722 and the conversation history 724, the topic switch detector 702 determines, at block 726, whether a new knowledge context is needed. Therefore, the block 726 discloses decision regarding that the current context answers user query, there may be no need to search new context in different databases else the block 726 directs to search new database by the LLM agent. However, when no new context is needed, the topic switch detector 702 informs the LLM main agent 706 to continue the user conversation with the same knowledge context. In another embodiment, when a new context is needed, the topic switch detector 702 generates new queries to sub agents. The sub agents may include a support ticket sub agent 728, document sub agent 730, and code sub agent 732, and the like.

Thereafter, the sub agents (support ticket sub agent 728, document sub agent 730, and code sub agent 732) extract updated knowledge context 734, based on the queries of the topic switch detector 702. The updated knowledge context 734 is provided to the knowledge context 710 of the LLM main agent 706, which, thereby, provides a final response 736 in response to the user query 704.

In an embodiment, when sufficient context is provided, the topic switch detector 702 may relay this information to the ML model and the LLM main agent 706 provides an interface with the ML model, such that context within the ML model remains unchanged. For example, when a user is continuing the conversation within the same context the topic switch detector 702 may indicate that the context is sufficient to the LLM main agent 706, such that context remains unchanged. Advantageously, this reduces computational time by not requiring the ML model to query entire databases and assists in providing accurate responses to user requests.

In another embodiment, when sufficient context is determined, the topic switch detector 702 identifies which knowledge databases to query, and what queries to utilize for each of the knowledge databases.

In an embodiment, the process flow 700 is implemented in association with the flow diagram 500 and the flow diagram 600, which disclose steps for querying different knowledge databases based on the second user request, wherein a change in the context of the user request switches the 'topic', and hence the queried databases.

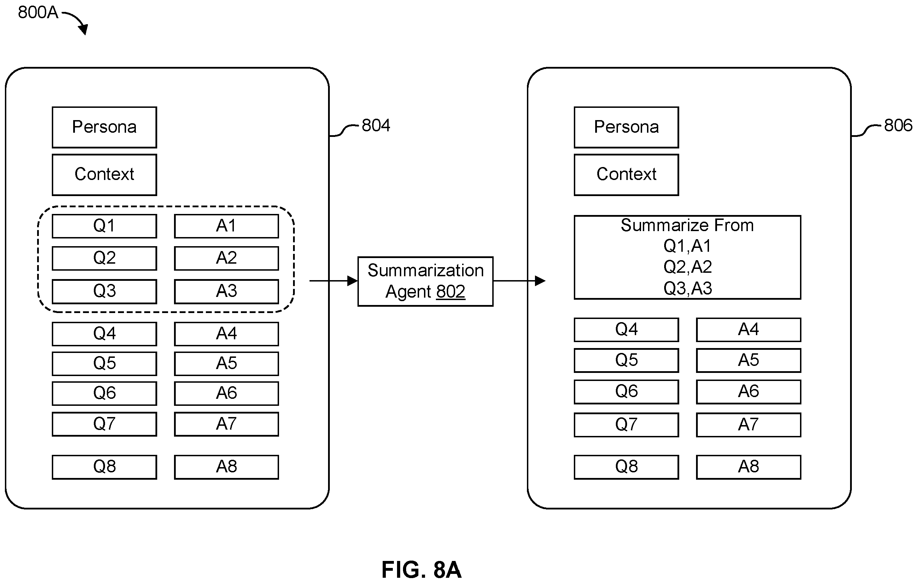

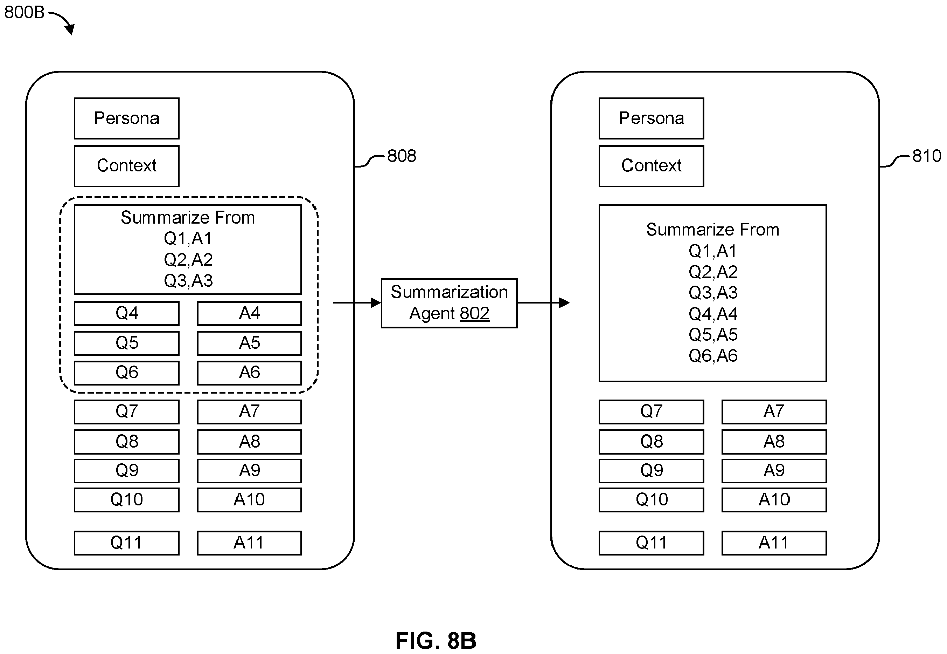

FIGs. 8A and 8B illustrate a block diagram 800A and a block diagram 800B disclosing technique for summarizing conversations, in accordance with the present disclosure. A summarization agent 802 iteratively summarizes user conversations using the ML model into conversation history which is compacted into single data chunks. In an embodiment, the summarization agent 802 is configured to focus on important information to ensure efficient and accurate summarization with almost no data loss.

Specifically, the block diagram 800A discloses summarization of conversations associated with user requests and results, in accordance with the present disclosure.

As illustrated, a conversation summarization is triggered by sending instructions to summarize a portion of conversation history 804 (along with user persona and context of the conversation) to the summarization agent 802. In an embodiment, summarizing the conversation is performed after a predetermined number of requests and results have occurred in the conversation. For example, summarization of the conversation may be performed when the ML model has fulfilled five requests by providing five results.

In some embodiments, the conversation summarization may be triggered in a pre-defined manner or an ad-hoc manner. When triggered in the pre-defined manner, the conversation summarization may be triggered at timely and/or fuzzy intervals of time and/or length of conversations. For example, the summarization may be triggered after every 2 minutes, one conversation, 5 back-and-forth dialogue exchanges (including the user requests and the results), and the like. When triggered in the ad-hoc manner, a user associated with the ML model may provide instructions in real time to trigger the conversation summarization. The portion of the conversation comprises a first request and the result, a second request and its associated result, and a third request with its result.

In an embodiment, summarizing the conversation preserves relevant details of the conversation. The summarization agent 802 intelligently extracts essential information from the conversation and summarizes the same in a compact form for storage within an organizational database. For example, if the user request Q1 pertains to `I am a dealer, I am not able to edit the product description for product ID 2556', the summarized form of the same may be `dealer unable edit product description 2556'. It will be appreciated that the summarized conversations stored within the organizational database may be linked with a profile of the user. This advantageously equips the ML model to have contextual information on the user resulting in accurate contextual identification, whilst also allowing the user to refer to the conversation history in the future.

Thereafter, the summarization agent 802 outputs conversation history 806, having a summarized conversation for the predetermined number of requests and results. As illustrated, the user requests Q1, Q2, and Q3, and respective results A1, A2, and A3; have been summarized into a summarized form of one data chunk including all relevant information from all requests and results Q1, A1, Q2, A2, Q3, and A3.

In an embodiment, contextual information from the conversation is determined based on the summarized conversation. Since the summarized conversation provides a snapshot of relevant data points within the conversation, it is beneficial to determine the contextual information from the summarized conversation as it reduces the computational time, thereby increasing efficiency and robustness. For example, it takes less time to review key notes from a 1-hour conversation instead of reviewing the entire transcript of the conversation.

The block diagram 800B discloses iterative nature of the summarization of conversations illustrated in FIG. 8A, in accordance with the present disclosure. As illustrated in the figure, the summarization agent 802 may iteratively keep summarizing and adding conversations to the summarized form. The summarization agent 802 inputs a conversation 808 already having a portion of the conversation in the summarized form. Thereafter, the summarization agent 802 outputs the conversation history 810, having an iteratively summarized conversation of requests and results. The user requests Q4, Q5, and Q6, and respective results A4, A5, and A6; have been summarized into the summarized form of one data chunk including all relevant information from all requests and results Q1, A1, Q2, A2, Q3, A3, Q4, A4, Q5, A5, Q6, and A6.

In some embodiments, iteratively summarized conversations may be stored in one data chunk. In another embodiment, iteratively summarized conversations may be split into multiple data chunks based on the size of summarized conversations as well as the size of the data chunks.

In some embodiments, summarization of the conversations enables the ML model to utilize more conversational context, providing meaningful conversations (since the number of dialogues for context-awareness are limited), leading to more accurate results and improved accuracy. The summarization of conversations is also beneficial in mimicking a human-like conversation, such that the ML model can hold longer and detailed conversations with human users.

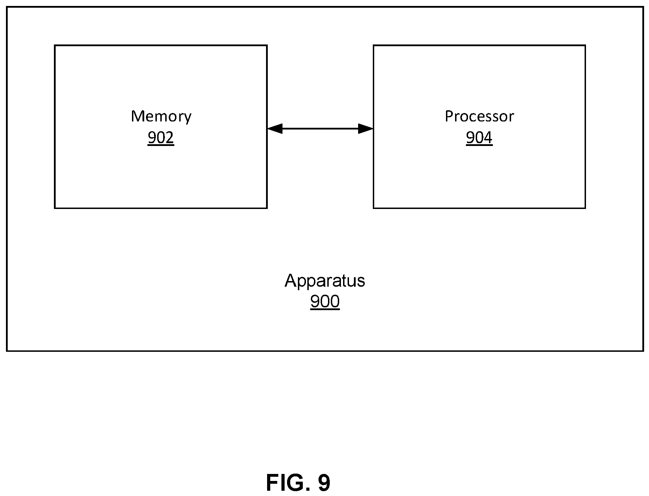

FIG. 9 is a block diagram of an apparatus 900 of the present disclosure. As illustrated in the figure, the apparatus 900 discloses a memory (implemented as a memory 902) and a processor (implemented as a processor 904). The processor 904 is coupled to the memory 902. The memory 902 stores computer-implementable instructions, on execution of which, the processor 904 is configured to perform the computer implemented method 200 of the present disclosure.

The processor 904 is configured to process a received first user request by a machine learning (ML) model to predict a knowledge context area, of a set of knowledge context areas, based on the received first user request and a conversation history with the first user, wherein the knowledge context area is based on a predetermined structure of an organization associated with the first user. Further, the processor 904 is configured to select one or more knowledge databases of a set of knowledge databases by the ML model, based on the received first user request and predicted knowledge context area, a user role associated with the received first user request, and contextual information from the conversation history associated with the received first user request, wherein the one or more knowledge databases includes preprocessed data from one or more data sources. Furthermore, the processor 904 is configured to query the knowledge database based on the received first user request to obtain a result. Thereafter, the processor 904 is configured to output the result based on the querying of the knowledge database.

In an embodiment, the processor 904 is configured to determine a user role based on an identity associated with the received first user request, wherein the knowledge context area is predicated based on the user role associated with the received first user request, wherein the preprocessed data is preprocessed by an ML model data extractor; wherein the ML model data extractor is configured to generate vectorized data and metadata to classify portions of the data into categories; wherein the categories are defined based on knowledge context area associated with the organization; wherein knowledge context areas associated with the organization are defined based on a knowledge graph; wherein the knowledge graph is based on entity relationships within the organization; wherein entities within the organization are associated with different knowledge databases.

In an embodiment, the processor 904 is configured to receive a second user request; predict that the second user request is associated with a new knowledge context area; and query another knowledge database based on the second user request and new knowledge context area, wherein the another knowledge database is associated with the new knowledge context area.

The specification and drawings are to be regarded in an illustrative rather than a restrictive sense. It will, however, be evident that various modifications and changes may be made thereunto without departing from the broader spirit and scope of the invention as set forth in the claims.

### STATEMENTS

1. A computer-implemented method comprising:
   processing, by one or more processors, a received first user request to predict a knowledge context area, of a set of knowledge context areas, based on the received first user request and a conversation history with a first user, wherein the knowledge context area is based on a predetermined structure of an organization associated with the first user;
   selecting, by the one or more processors, one or more knowledge databases, of a set of knowledge databases, based on the received first user request and the knowledge context area, a user role associated with the received first user request, and contextual information from the conversation history associated with the received first user request, wherein the one or more knowledge databases includes preprocessed data from one or more data sources;
   querying, the one or more knowledge databases based on the received first user request to obtain a result; and
   outputting, the result based on the querying of the one or more knowledge databases.
2. The computer-implemented method of statement 1, further comprising determining a user role based on an identity associated with the received first user request.
3. The computer-implemented method of statement 2, wherein the knowledge context area is predicted based on the user role associated with the received first user request.
4. The computer-implemented method of any preceding statement, wherein raw data is preprocessed by an ML model data extractor, wherein the ML model data extractor is configured to generate vectorized data and metadata to classify portions of the data into categories, wherein the categories are defined based on the knowledge context area associated with the organization.
5. The computer-implemented method of statement 4, further comprising:
   receiving a second user request;
   predicting that the second user request is associated with a new knowledge context area; and
   querying another knowledge database based on the second user request and new knowledge context area, wherein the another knowledge database is associated with the new knowledge context area.
6. The computer-implemented method of statement 4, further comprising:
   receiving a second user request;
   predicting that the second user request is associated with a current knowledge context area; and
   querying the one or more knowledge databases based on the second user request.
7. The computer-implemented method of any of statements 4-6, wherein the knowledge context area associated with the organization is defined based on a knowledge graph, wherein the knowledge graph is based on entities relationships within the organization.
8. The computer-implemented method of statement 7, wherein the entities within the organization are associated with different knowledge databases.
9. The computer-implemented method of statement 8, wherein the one or more knowledge databases include at least one of a documentation database, a source code, a historical service ticket database, or an organization transactional database.
10. The computer-implemented method of any preceding statement, further comprising summarizing conversation associated with the first request and the result, wherein contextual information from the conversation is determined based on the summarized conversation.
11. The computer-implemented method of statement 10, wherein summarizing the conversation is performed after a predetermined number of requests and results occur in the conversation.
12. The computer-implemented method of either of statements 10 or 11, wherein summarizing the conversation preserves relevant details of the conversation.
13. An apparatus comprising:
   at least one memory; and
   at least one processor coupled to the at least one memory, the at least one processor being configured to:
      process, by a machine learning (ML) model, a received first user request to predict a knowledge context area, of a set of knowledge context areas, based on the received first user request and a conversation history with a first user, wherein the knowledge context area is based on a predetermined structure of an organization associated with the first user;
      select, one or more knowledge databases, of a set of knowledge databases, based on the received first user request and the knowledge context area, a user role associated with the received first user request, and contextual information from the conversation history associated with the received first user request, wherein the one or more knowledge databases includes preprocessed data from one or more data sources;
      query the one or more knowledge databases based on the received first user request to obtain a result; and
      output the result based on the querying of the one or more knowledge databases.
14. The apparatus of statement 13, wherein the at least one processor is further configured to determine a user role based on an identity associated with the received first user request.
15. The apparatus of statement 14, wherein the knowledge context area is predicated based on the user role associated with the received first user request.
16. The apparatus of any of statements 13-15, wherein raw data is preprocessed by an ML model data extractor, wherein the ML model data extractor is configured to generate vectorized data and metadata to classify portions of the data into categories, and wherein the categories are defined based on the knowledge context area associated with the organization.
17. The apparatus of statement 16, wherein the at least one processor is further configured to:
   receive a second user request;
   predict that the second user request is associated with a new knowledge context area; and
   query another knowledge database based on the second user request and new knowledge context area, wherein the another knowledge database is associated with the new knowledge context area.
18. The apparatus of statement 16, wherein the at least one processor is further configured to:
   receive a second user request;
   predict that the second user request is associated with a current knowledge context area; and
   query the one or more knowledge databases based on the second user request.
19. The apparatus of any of statements 16-18, wherein the knowledge context areas associated with the organization is defined based on a knowledge graph, and wherein the knowledge graph is based on entities relationships within the organization.
20. The apparatus of statement 19, wherein the entities within the organization are associated with different knowledge databases.

## Claims

1. A computer-implemented method comprising:
processing, by one or more processors, a received first user request to predict a knowledge context area, of a set of knowledge context areas, based on the received first user request and a conversation history with a first user, wherein the knowledge context area is based on a predetermined structure of an organization associated with the first user;
selecting, by the one or more processors, one or more knowledge databases, of a set of knowledge databases, based on the received first user request and the knowledge context area, a user role associated with the received first user request, and contextual information from the conversation history associated with the received first user request, wherein the one or more knowledge databases includes preprocessed data from one or more data sources;
querying, the one or more knowledge databases based on the received first user request to obtain a result; and
outputting, the result based on the querying of the one or more knowledge databases.

2. The computer-implemented method of claim 1, further comprising determining a user role based on an identity associated with the received first user request.

3. The computer-implemented method of claim 2, wherein the knowledge context area is predicted based on the user role associated with the received first user request.

4. The computer-implemented method of any preceding claim, wherein raw data is preprocessed by an ML model data extractor, wherein the ML model data extractor is configured to generate vectorized data and metadata to classify portions of the data into categories, wherein the categories are defined based on the knowledge context area associated with the organization.

5. The computer-implemented method of claim 4, further comprising:
receiving a second user request;
predicting that the second user request is associated with a new knowledge context area; and
querying another knowledge database based on the second user request and new knowledge context area, wherein the another knowledge database is associated with the new knowledge context area.

6. The computer-implemented method of claim 4, further comprising:
receiving a second user request;
predicting that the second user request is associated with a current knowledge context area; and
querying the one or more knowledge databases based on the second user request.

7. The computer-implemented method of any of claims 4-6, wherein the knowledge context area associated with the organization is defined based on a knowledge graph, wherein the knowledge graph is based on entities relationships within the organization.

8. The computer-implemented method of claim 7, wherein the entities within the organization are associated with different knowledge databases.

9. The computer-implemented method of claim 8, wherein the one or more knowledge databases include at least one of a documentation database, a source code, a historical service ticket database, or an organization transactional database.

10. The computer-implemented method of any preceding claim, further comprising summarizing conversation associated with the first request and the result, wherein contextual information from the conversation is determined based on the summarized conversation.

11. The computer-implemented method of claim 10, wherein summarizing the conversation is performed after a predetermined number of requests and results occur in the conversation.

12. The computer-implemented method of either of claims 10 or 11, wherein summarizing the conversation preserves relevant details of the conversation.

13. An apparatus comprising:
at least one memory; and
at least one processor coupled to the at least one memory, the at least one processor being configured to:
process, by a machine learning (ML) model, a received first user request to predict a knowledge context area, of a set of knowledge context areas, based on the received first user request and a conversation history with a first user, wherein the knowledge context area is based on a predetermined structure of an organization associated with the first user;
select, one or more knowledge databases, of a set of knowledge databases, based on the received first user request and the knowledge context area, a user role associated with the received first user request, and contextual information from the conversation history associated with the received first user request, wherein the one or more knowledge databases includes preprocessed data from one or more data sources;
query the one or more knowledge databases based on the received first user request to obtain a result; and
output the result based on the querying of the one or more knowledge databases.

14. A computer readable medium comprising instructions which, when executed by at least one processor, causes the at least one processor to carry out the steps of any of claims 1-12.
